# EUROPÄISCHE PATENTSCHRIFT

(11) **EP 3 059 628 B1**
(45) Veröffentlichungstag und Bekanntmachung des Hinweises auf die Patenterteilung: **27.12.2017**
(21) Anmeldenummer: 16155728.5
(22) Anmeldetag: 15.02.2016
(51) Int. Cl.: G02B 23/00, G02B 13/00

(54) **SCHNITTWEITEN-EXTENDER FÜR TELESKOPISCHE ABBILDUNGSSYSTEME**
CUT WIDTH EXTENDER FOR TELESCOPIC IMAGING SYSTEMS
PROLONGATEUR DE DISTANCES FOCALES POUR SYSTEMES D'IMAGERIE TELESCOPIQUES

(30) Priorität: 18.02.2015 DE 102015102319
(43) Veröffentlichungstag der Anmeldung: 24.08.2016
(73) Patentinhaber: Leica Camera AG, 35578 Wetzlar (DE)
(72) Erfinder: Kammans, Sigrun, 35745 Herborn (DE)
(74) Vertreter: Stamer, Jan

(56) Entgegenhaltungen:
- EP-A2- 0 404 304
- WO-A1-2008/065913
- DE-A1- 3 809 656
- US-A- 3 487 760
- US-A- 5 742 434

## Beschreibung

Die Erfindung betrifft einen Schnittweiten-Extender mit den Merkmalen des Oberbegriffs des Anspruchs 1.

Ein Schnittweiten-Extender dieser Art ist aus der älteren Patentanmeldung DE 10 2014 109 095.0 für ein Fernrohr mit Umlenksystem und auswechselbaren Okularen bekannt. Eine mit dem Extender verbundene Relay-Linse negativer Brechkraft ist beabstandet zur in Lichtrichtung ersten Anschlagebene des Extenders vor dieser angeordnet. Innerhalb des Extender-Gehäuses ist eine schräg stehende Strahlenteilerfläche zur Auskopplung eines Teiles der Abbildungsstrahlen vorhanden.

Die ausgekoppelten Abbildungsstrahlen können von einem Bildaufnahme-Sensor aufgenommen und zur digitalen Bildanzeige- und/oder -auswertung weitergeleitet werden. Mit dem Extender ist es möglich, ohne Veränderung der Konstruktion des Fernrohres ein Bild des jeweils beobachteten Objektes aufzunehmen und mit anderen interessierten Beobachtern auszutauschen.

Es ist bekannt, an die Anriegelvorrichtung eines Foto-Wechselobjektivs für Spiegelreflexkameras einen Adapter mit Umkehrsystem und Okular anzusetzen und damit das Foto-Objektiv als Fernrohr zu nutzen.

Aus der Druckschrift DE 10 2011 056 757 A1 ist es bekannt, ein Teleskop modular mit auswechselbaren Okularen aufzubauen, wobei das Okularmodul ein Okular, eine Vergrößerungseinheit und ein Bild-Umkehrsystem enthält. Dem Objektiv mit Fokussierlinse nachfolgend ist eine Trennebene für die Auswechslung des Okularmoduls vorgesehen.

Aus der Druckschrift US 2009/0040600 A1 ist ein Teleskop-Adapter zum Tragen einer Kamera bekannt. Der Teleskop-Adapter weist eine Anriegelfläche mit Befestigungselementen zum Anriegeln an ein Teleskop anstelle eines Okulars auf. Der Adapter enthält lichteintrittsseitig eine Linsenanordnung negativer Brechkraft zur Verlängerung der Abbildungslänge des Teleskop-Objektivs. In den verlängerten Abbildungsstrahlengang ist ein Strahlenteiler zur Erzeugung eines Beobachtungsstrahlenbündels und eines Bildaufnahmestrahlenbündels eingesetzt. Die Beobachtung erfolgt über ein Okular-Linsensystem positiver Brechkraft und die Bildaufnahme über ein Bildaufnahme-Linsensystem positiver Brechkraft, die beide Teile des Teleskop-Adapters sind. Das Bildaufnahme-Linsensystem ist wie ein Okular-Linsensystem aufgebaut, um für das Kamera-Objektiv ebenfalls ein im Unendlichen liegendes Bild zu erzeugen.

Die Tragevorrichtung zur Befestigung der Kamera an dem Adapter ist mechanisch aufwändig und steht mit dem Gehäuse für das Bildaufnahme-Linsensystem einseitig in größerer Länge aus dem Adapter hervor, wodurch der Einblick in das Beobachtung-Okular und die Balance beim Halten des Teleskops behindert werden.

Aus der Druckschrift US 5 742 434 A ist ein auswechselbares Okular als Adapter für ein Nachtsichtgerät bekannt, bei dem vor einer bikonvexen Austrittslinse des Okulars ein Strahlenteiler angeordnet ist, der einen Teil der Abbildungsstrahlen zur Darstellung für einen externen Beobachter auskoppelt.

Aus der Druckschrift DE 38 09 656 A1 ist ein Fernsehokular für visuelle optische Geräte bekannt, bei dem das vom Geräte-Okular vom Gegenstand entworfene Zwischenbild durch ein Hilfsobjektiv in ein Bildteilerprisma geleitet und danach von einer Fernsehkamera aufgenommen wird. Das Geräte-Okular und die Fernsehkamera bilden eine Einheit.

Der Erfindung lag die Aufgabe zugrunde, die vorgenannten, als Foto-Objektive oder Teleskop-Objektive ausgebildeten teleskopischen Abbildungssysteme um die Möglichkeit einer digitalen Bildauskopplung zu erweitern, ohne die ursprünglich vorgesehene Ansetzbarkeit der genannten Okularmodule zu behindern.

Diese Aufgabe wird für ein teleskopisches Abbildungssystem mit einem Schnittweiten-Extender der eingangs genannten Art erfindungsgemäß durch die kennzeichnenden Merkmale des Anspruchs 1 gelöst. Vorteilhafte Weiterbildungen ergeben sich aus den Merkmalen der Unteransprüche.

Der Erfindung liegt die Erkenntnis zugrunde, dass dem teleskopischen Abbildungssystem ein auswechselbares Gehäuse als Extender für die Schnittweite des teleskopischen Abbildungssystems nachgeordnet werden kann, so dass einerseits Raum zur Einfügung eines Strahlenauskopplung-Elementes geschaffen wird und andererseits an der Austrittsseite des Extenders gleiche Abbildungsverhältnisse für das anzusetzende Okularmodul bestehen wie bei direktem Ansetzen an das teleskopische Abbildungssystem.

Da sich die Sensor- bzw. Kamera-Technik deutlich schneller weiterentwickelt als die Technik der teleskopischen Abbildungsysteme bietet die Einfügung eines auswechselbaren Extender-Gehäuses die Möglichkeit, solche Weiterentwicklungen durch den Austausch einer relativ kostengünstigen Vorrichtung zu übernehmen, ohne die übrigen optischen Teile verändern zu müssen.

Externe mobile Anzeigegeräte können, so wie gerade vorhanden benutzt und jederzeit ausgetauscht werden.

Das optische Auskoppelsystem für die Bildaufnahme kann auf eine optimale Sensorgröße angepasst werden, wobei durch Spiegel- und Linsensysteme des Auskoppelsystems gute Möglichkeiten für die Korrektur von Abbildungsfehlern bei der Bildaufnahme bestehen.

Unter Berücksichtigung der vorgegebenen Abbildungsverhältnisse des teleskopischen Abbildungssystems ist bei einem Foto-Objektiv für das erste Linsenglied der Relay-Linse eine negative Brechkraft vorteilhaft, um über eine zusätzliche Verlängerung der Schnittweite Raum für die weitere Auskoppeloptik zu gewinnen. Beim Teleskop-Objektiv ist eine positive Brechkraft vorteilhaft, um die Schnittweite bereits so weit zu verkürzen, dass die weitere Auskoppeloptik und der Sensor innerhalb des Externdergehäuses Platz finden. Insgesamt ist für die Relay-Linsen-Zwischenoptik im Beobachtungsstrahlengang eine negative Brechkraft vorzusehen, um insgesamt eine Schnittweiten-Verlängerung zu erhalten.

Die negative Brechkraft kann im Falle des Teleskop-Objektivs relativ schwach sein, so dass sich für den Beobachtungsstrahlengang z.B. nur eine zusätzliche 1,2-fache Vergrößerung ergibt. Beim Foto-Objektiv bietet sich eine stärkere negative Brechkraft für eine resultierende 1,5-fache Vergrößerung an.

Die mechanische Verlängerung zwischen den Anschlagebenen bei zwischengeschaltetem Extender muss der durch das Relay-Linsensystem erzeugten Verlagerung der Bildebenen entsprechen.

Das vom Kamera-Sensor aufgenommene Bild kann weiterverarbeitet und angezeigt werden durch
- einen in das Gehäuse integrierten Prozessor und ein außen am Gehäuse angebrachtes Display,
- einen in das Gehäuse integrierten Prozessor und ein über eine integrierte Schnittstelle damit verbundenes externes Display,
- über eine integrierte Schnittstelle und mit dem Gehäuse verbundene externe Prozessoren und Displays oder
- über ein mit einer integrierten Schnittstelle verbundenes externes mobiles Kommunikationsgerät.

Die integrierte Schnittstelle kann einen Kabelanschluss und/oder eine Wireless-Verbindung bedienen. Dabei sollten vorzugsweise bekannte und gebräuchliche Anschlüsse und Protokolle genutzt werden.

Ein kleines externes mobiles Kommunikationsgerät kann zusätzlich an günstiger Stelle mit Hilfe eines einfachen und ergonomischen mechanischen Adapters an dem Gehäuse oder dem teleskopischen Abbildungssystem befestigt sein.

Mit Hilfe eines externen großen Displays oder über eine gemeinsame Verbindung mit der integrierten Schnittstelle kann das betrachtete Bild mit anderen, auch weiter entfernt positionierten Personen gemeinsam betrachtet werden.

Die Strahlenteilerfläche kann plan sein. Sie kann aber auch gekrümmt (sphärisch, elliptisch, frei geformt) ausgebildet sein, um bereits einen Teil oder die gesamte Fokussierung des ausgekoppelten Strahlenganges auf die Sensorfläche der Kamera zu bewirken. Eine frei geformte Krümmung kann insbesondere eine anamorphotisch abbildende Krümmung sein.

Der Strahlenteiler kann aus Prismen bestehen oder aus einem dünnen teildurchlässigen Spiegel, wobei auch ein Prismensystem mit einer oder mehreren Freiformflächen vorgesehen sein kann.

Die optische Achse zum Kamera-Sensor wird am Strahlenteiler vorzugsweise um 90° abgelenkt. Es können aber auch flachere oder steilere Winkel vorgesehen sein. Die Form des Extender-Gehäuses kann an die Anordnung der innen liegenden Elemente angepasst werden.

Das Linsensystem für Relay-Linse und Abbildung auf den Kamera-Sensor kann aus einer oder mehreren Linsen, GRIN-Linsen oder diffraktiven optischen Elementen bestehen. Die Linsen können aus Glas und/oder optischem Kunststoff bestehen und auch asphärische Flächen haben.

Die adaptierte Vorrichtung sollte für Querformat-Aufnahmen ausgerichtet sein, wobei entweder die gesamte Vorrichtung oder die Einheit mit Strahlenteiler und Sensor bei Bedarf für Hochformat-Aufnahmen um 90° um die optische Achse drehbar sein kann.

Das Kamera-Modul kann auch mit einem Autofokus ausgestattet sein.

In der Zeichnung sind Ausführungsbeispiele für den Extender schematisch dargestellt und werden nachfolgend anhand der Figuren näher beschrieben. Dabei zeigen
Fig.1 die Extender-Optik für ein Foto-Objektiv und
Fig.2 die Extender-Optik für ein Teleskop-Objektiv.

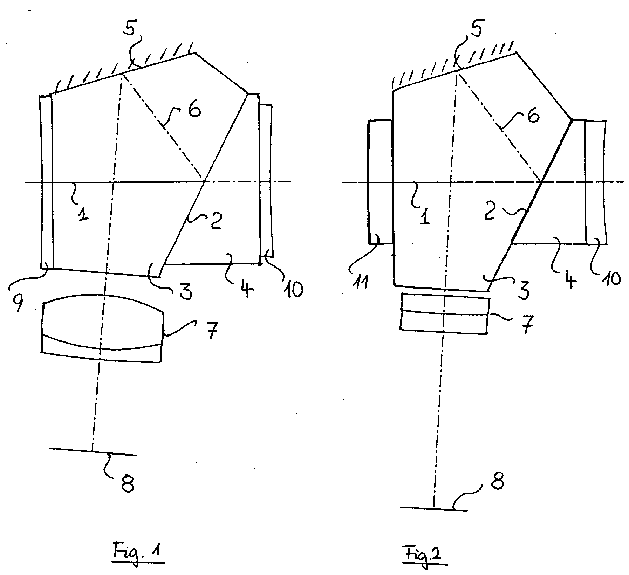

Die in Fig. 1 dargestellte Extender-Optik zeigt die optische Achse 1 des von einem nicht dargestellten Foto-Objektiv kommenden und zu einem ebenfalls nicht dargestellten Okular-Modul gehenden Abbildungsstrahlenganges. Die Abbildungsstrahlen werden an einer schräg zur optischen Achse 1 stehenden Strahlenteilerfläche 2 teilweise reflektiert. Die Strahlenteilerfläche 2 ist in ein aus zwei Prismen 3, 4 aufgebautes Prismensystem eingefügt. Die Prismenfläche 5 ist verspiegelt und lenkt die ausgekoppelten Abbildungsstrahlen 6 über Abbildungslinsen 7 auf einen Kamera-Sensor 8.

Lichteintrittsseitig ist an das Prisma 3 ein erstes Linsenglied 9 der Relay-Linse angekittet. lichtaustrittsseitig ist an das Prisma 4 ein weiteres Linsenglied 10 der Relay-Linse angesetzt. Beide Linsenglieder 9, 10 besitzen zusammen eine negative Brechkraft.

Bei dem in Fig. 2 dargestellten, für ein Teleskop-Objektiv geeigneten Ausführungsbeispiel sind gleiche Teile wie in Fig. 1 mit denselben Bezugszeichen versehen. Das lichteintrittsseitig angeordnete erste Linsenglied 11 der Relay-Linse hat hier eine positive Brechkraft. Das weitere Linsenglied 10 besitzt wiederum eine negative Brechkraft.

Das die Extender-Optik einschließende Gehäuse und seine Anschlagflächen sind nicht dargestellt. Die Gestaltung ist an das vorhandene Foto-Objektiv oder Teleskop-Objektiv anzupassen und durch einen erfahrenen Konstrukteur entsprechend seinem Fachwissen auszuführen. Das betrifft auch die Anordnung geeigneter Bild-Prozessoren, Schnittstellen und Displays.

### Bezugszeichenliste

- 1: optische Achse
- 2: Strahlenteilerfläche
- 3,4: Prismen
- 5: verspiegelte Prismenfläche
- 6: ausgekoppelte Abbildungsstrahlen
- 7: Abbildungslinsen
- 8: Kamera-Sensor
- 9;11: erstes Linsenglied Relay-Linse
- 10: weiteres Linsenglied Relay-Linse

## Patentansprüche

1. Schnittweiten-Extender für teleskopische Abbildungssysteme mit auswechselbaren Betrachtungs-Okularen, bestehend aus einem zylindrischen Gehäuse, das in Lichtrichtung eine erste und eine zweite senkrecht zu seiner Zylinderachse stehende Anschlagebene mit zugehörigen Verbindungselementen zum Teleskopkörper und zum auswechselbaren Betrachtungs-Okular aufweist und bei dem das Gehäuse eine zwischen der ersten Anschlagebene und der zweiten Anschlagebene angeordnete Relay-Linse aufweist, **dadurch gekennzeichnet, dass** die Relay-Linse zweigeteilt aus einem ersten positiven, neutralen oder negativen und einem weiteren negativen Linsenglied besteht, wobei zwischen dem ersten (9, 11) und dem weiteren Linsenglied (10) eine schräg zur optischen Achse (1) des Abbildungssystems stehende Strahlenteiler-Fläche (2) nachgeordnet ist und das erste und weitere Linsenglied (9, 11; 10) zusammen mit dem dazwischen liegenden Abstand insgesamt eine negative Brechkraft aufweisen.

2. Extender nach Anspruch 1, **dadurch gekennzeichnet, dass** die in Lichtrichtung vordere und die rückseitige Strahlteiler-Fläche (2) mit optisch transparenten Prismen (3, 4) mit senkrecht zur optischen Achse (1) stehenden Lichteintritts- und Lichtaustrittsflächen zu einem Strahlenteiler-Element verbunden sind.

3. Extender nach Anspruch 1 oder 2, **dadurch gekennzeichnet, dass** die Strahlenteiler-Fläche (2) eine frei geformte Krümmung aufweist.

4. Extender nach einem der vorhergehenden Ansprüche, **dadurch gekennzeichnet, dass** in dem nach Eintreten in den Extender an der Strahlenteiler-Fläche (2) reflektierten, aus dem Strahlenteiler-Element austretenden Lichtbündel optische Umlenk- und/oder Abbildungselemente (7) mit einem in ihrer Abbildungsebene liegenden elektronischen Bildsensor (8) mit Prozessor angeordnet sind.

5. Extender nach Anspruch 4, **dadurch gekennzeichnet, dass** die optischen Umlenk- und/oder Abbildungs-Elemente (7) und der Bildsensor (8) mit Prozessor innerhalb des Gehäuses angeordnet sind.

6. Extender nach einem der Ansprüche 4 oder 5, **dadurch gekennzeichnet, dass** der Prozessor mit einer Datenübertragungs-Schnittstelle verbunden ist.

7. Extender nach Anspruch 6, **dadurch gekennzeichnet, dass** über die Schnittstelle ein innerhalb und/oder außerhalb des Gehäuses angeordnetes Display zur Darstellung des vom Bildsensor (8) aufgenommenen Bildes ansteuerbar ist.

8. Extender nach Anspruch 7, **dadurch gekennzeichnet, dass** ein innerhalb des Gehäuses liegender Bildschirm über die rückseitige Strahlenteiler-Fläche (2) beobachtbar ist.

9. Extender nach Anspruch 7 oder 8, **dadurch gekennzeichnet, dass** über die Schnittstelle auf dem innerhalb des Gehäuses angeordneten Bildschirm oder Display externe Kommunikations-Daten darstellbar sind.

10. Extender nach einem der vorhergehenden Ansprüche, **dadurch gekennzeichnet, dass** das Gehäuse des Extenders oder ein den Strahlenteiler (2), die Abbildungsoptik (7) und den Bildsensor (8) enthaltender Zwischentubus des Extenders um die optische Achse (1) der Relay-Linse (9, 11; 10) herum gegenüber einem Okulareinblick drehbar angeordnet sind.

11. Extender nach einem der vorhergehenden Ansprüche, **dadurch gekennzeichnet, dass** das Betrachtungs-Okular ein Prismen- oder ein Linsen-Umkehrsystem enthält.

12. Extender nach einem der vorhergehenden Ansprüche, **dadurch gekennzeichnet, dass** das teleskopische Abbildungssystem ein Foto-Objektiv ist.

## Claims

1. Back focal length extender for telescopic imaging systems having interchangeable observation eyepieces, consisting of a cylindrical housing which, in the light direction, has a first and a second stop plane perpendicular to its cylinder axis with associated connecting elements to the telescope body and to the interchangeable observation eyepiece and in which the housing has a relay lens that is arranged between the first stop plane and the second stop plane, **characterized in that** the relay lens, in two-part form, consists of a first positive, neutral or negative lens member and a further negative lens member, wherein there is disposed downstream between the first lens member (9, 11) and the further lens member (10) a beam splitter surface (2) that is at an angle to the optical axis (1) of the imaging system and the first and further lens members (9, 11; 10), together with the distance lying therebetween, have a negative refractive power overall.

2. Extender according to Claim 1, **characterized in that** the front and rear side beam splitter surface (2), the directions referring to the light direction, are connected to optically transparent prisms (3, 4) with light entry and light exit surfaces that are perpendicular to the optical axis (1) so as to form a beam splitter element.

3. Extender according to Claim 1 or 2, **characterized in that** the beam splitter surface (2) has a free-formed curvature.

4. Extender according to any one of the preceding claims, **characterized in that** optical deflection and/or imaging elements (7) are arranged in the light beam and have a processor-containing electronic image sensor (8) lying in the imaging plane thereof, said light beam being reflected at the beam splitter surface (2) after entry into the extender and emerging from the beam splitter element.

5. Extender according to Claim 4, **characterized in that** the optical deflection and/or imaging elements (7) and the processor-containing image sensor (8) are arranged within the housing.

6. Extender according to either of Claims 4 and 5, **characterized in that** the processor is connected to a data transmission interface.

7. Extender according to Claim 6, **characterized in that** a display, arranged within and/or outside of the housing, for presenting the image recorded by the image sensor (8) is actuatable by way of the interface.

8. Extender according to Claim 7, **characterized in that** a screen lying within the housing is observable via the rear side beam splitter surface (2).

9. Extender according to Claim 7 or 8, **characterized in that** external communications data are displayable on the screen or display arranged within the housing via the interface.

10. Extender according to any one of the preceding claims, **characterized in that** the housing of the extender or an intermediate tube of the extender containing the beam splitter (2), the imaging optical unit (7) and the image sensor (8) is arranged in a manner rotatable about the optical axis (1) of the relay lens (9, 11; 10) in relation to an eye lens of the eyepiece.

11. Extender according to any one of the preceding claims, **characterized in that** the observation eyepiece contains a prism or lens erecting system.

12. Extender according to any one of the preceding claims, **characterized in that** the telescopic imaging system is a photo lens.

## Revendications

1. Prolongateur de tirage pour d'imagerie télescopiques comportant un oculaire d'observation interchangeable, constitué d'un boîtier cylindrique qui comporte des premier et deuxième plans d'incidence orientés perpendiculairement à son axe de cylindre dans la direction de la lumière et muni d'éléments de liaison associés au corps de télescope et à l'oculaire d'observation interchangeable et dans lequel le boîtier comporte une lentille relais disposée entre le premier plan d'incidence et le deuxième plan d'incidence, **caractérisé en ce que** la lentille relais est divisée en deux parties constituées d'un élément de lentille neutre ou négatif et d'un autre élément de lentille négatif, dans lequel une surface de division de faisceau (2) est disposée en aval entre le premier élément de lentille (9, 11) et l'autre élément de lentille (10) de manière inclinée par rapport à l'axe optique (1) du système d'imagerie et dans lequel le premier élément de lentille et l'autre élément de lentille (9, 11 ; 10) présentent un pouvoir de réfraction total négatif en association avec la distance les séparant.

2. Prolongateur selon la revendication 1, **caractérisé en ce que** les surfaces de division de faisceau avant et arrière (2), dans la direction de la lumière, sont reliées à des prismes optiquement transparents (3, 4) ayant des surfaces d'incidence de lumière et de sortie de lumière d'un élément diviseur de faisceau qui sont perpendiculaires à l'axe optique (1).

3. Prolongateur selon la revendication 1 ou 2, **caractérisé en ce que** la surface de division de faisceau (2) présente une courbure de forme libre.

4. Prolongateur selon l'une quelconque des revendications précédentes, **caractérisé en ce que** des éléments de déviation et/ou d'imagerie optiques (7) comportant un capteur d'image électronique (8) à processeur situé dans leur plan de formation d'image sont disposés sur des faisceaux lumineux qui, après pénétration dans le prolongateur, sont réfléchis sur les surfaces de division de faisceau (2) et sortent de l'élément diviseur de faisceau.

5. Prolongateur selon la revendication 4, **caractérisé en ce que** les éléments de déviation et/ou de formation d'image optiques (7) et le capteur d'image (8) à processeur sont disposés à l'intérieur du boîtier.

6. Prolongateur selon l'une quelconque des revendications 4 ou 5, **caractérisé en ce que** le processeur est relié à une interface de transmission de données.

7. Prolongateur selon la revendication 6, **caractérisé en ce qu'**un afficheur disposé à l'intérieur et/ou à l'extérieur du boîtier et destiné à représenter l'image acquise par le capteur d'image (8) peut être commandé par l'intermédiaire de l'interface.

8. Prolongateur selon la revendication 7, **caractérisé en ce qu'**un écran situé à l'intérieur du boîtier peut être observé par l'intermédiaire de la surface de division de faisceau arrière (2).

9. Prolongateur selon la revendication 7 ou 8, **caractérisé en ce que** des données de communication externes peuvent être représentées par l'intermédiaire de l'interface sur l'écran disposé à l'intérieur du boîtier.

10. Prolongateur selon l'une quelconque des revendications précédentes, **caractérisé en ce que** le boîtier du prolongateur ou **en ce qu'**un tube intermédiaire du prolongateur contenant le diviseur de faisceau (2), l'optique de formation d'image (7) et le capteur d'image (8) sont disposés de manière à pouvoir tourner autour de l'axe optique (1) de la lentille relais (9, 11 ; 10) par rapport à un oeilleton.

11. Prolongateur selon l'une quelconque des revendications précédentes, **caractérisé en ce que** l'oculaire d'observation comporte un système d'inversion à prisme ou à lentilles.

12. Prolongateur selon l'une quelconque des revendications précédentes, **caractérisé en ce que** le système d'imagerie télescopique est un objectif photographique.
